# EUROPÄISCHE PATENTSCHRIFT

(11) **EP 2 556 266 B1**
(45) Veröffentlichungstag und Bekanntmachung des Hinweises auf die Patenterteilung: **15.10.2014**
(21) Anmeldenummer: 11711571.7
(22) Anmeldetag: 01.04.2011
(51) Int. Cl.: F16D 41/20

(54) **LASTDREHMOMENTSPERRE UND AGGREGAT MIT EINER LASTDREHMOMENTSPERRE**
LOAD TORQUE LOCK AND MODULE HAVING A LOAD TORQUE LOCK
DISPOSITIF DE BLOCAGE DE COUPLE DE CHARGE ET UNITÉ ÉQUIPÉE D'UN DISPOSITIF DE BLOCAGE DE COUPLE DE CHARGE

(30) Priorität: 06.04.2010 DE 102010003657
(43) Veröffentlichungstag der Anmeldung: 13.02.2013
(73) Patentinhaber: Robert Bosch GmbH, 70442 Stuttgart (DE)
(72) Erfinder: KOERWER, Matthias, 77830 Buehlertal (DE); MILI, Tarek, 76133 Karlsruhe (DE); KUSSEROW, Peter, 77815 Buehl (DE); BOHR, Peter, 76137 Karlsruhe (DE); SCHLOSSER, Peter, 77815 Buehl (DE); THOENE, Holger, 76437 Rastatt (DE)
(86) Internationale Anmeldenummer: PCT/EP2011/055075
(87) Internationale Veröffentlichungsnummer: WO 2011/124526

(56) Entgegenhaltungen:
- EP-A1- 0 012 250
- EP-A1- 1 101 967
- DE-A1-102007 061 731
- US-A- 4 646 888
- US-A- 5 328 007

## Beschreibung

### Stand der Technik

Die Erfindung betrifft eine Lastdrehmomentsperre nach dem Oberbegriff des Anspruchs 1.

Eine derartige Lastdrehmomentsperre ist aus der nachveröffentlichten DE 10 2009 000 563 A1 der Anmelderin bekannt. Die bekannte Lastdrehmomentsperre weist ein Mitnehmerelement auf, das über Mitnehmerzapfen mit einem als Schlingfeder ausgebildeten Bremselement zusammenwirkt. Hierbei durchgreifen die Mitnehmerzapfen mit Drehwinkelspiel Ausnehmungen eines Antriebsrades, welches über ein am Antriebsrad ausgebildetes Außengewinde von einem Antriebsmotor angetrieben wird, um ein Drehmoment z.B. an eine nachgeschaltete Fensterhebermechanik oder eine Sitzverstellungsmechanik weiterzuleiten. Die Lastdrehmomentsperre dient dabei zum Sperren des Antriebsrades, wenn ein Drehmoment aus Richtung des anzutreibenden Elements eingeleitet wird. Je größer das zu übertragende Sperrdrehmoment von den Mitnehmerzapfen auf die Schlingfeder, desto größer ist auch die Biegebeanspruchung bzw. Biegespannung in den Mitnehmerzapfen. Dadurch müssen diese bei relativ großen zu übertragenden Sperrdrehmomenten entweder relativ groß dimensioniert werden, oder aber aus einem relativ steifen bzw. harten Material gefertigt werden.

Eine weitere Lastdrehmomentsperre ist z.B. aus der DE 1020 07061731A1 bekannt.

### Offenbarung der Erfindung

Ausgehend von dem dargestellten Stand der Technik liegt der Erfindung die Aufgabe zugrunde, eine Lastdrehmomentsperre nach dem Oberbegriff des Anspruchs 1 derart weiterzubilden, dass die mechanische Belastung auf den Mitnehmer beim Einleiten eines Sperrdrehmoments verringert wird. Insbesondere soll die Biegebeanspruchung auf die Mitnehmerzapfen reduziert werden. Diese Aufgabe wird bei einer Lastdrehmomentsperre mit den Merkmalen des Anspruchs 1 gelöst. Der Erfindung liegt dabei die Idee zugrunde, den Mitnehmer zweiteilig auszubilden, derart, dass der Kontaktbereich des Mitnehmers, der mit dem Schlingelement zusammenwirkt, in der Ebene des Schlingelements an einem ersten Mitnehmerelement angeordnet ist, das mit einem oberhalb des Antriebsrades angeordneten zweiten Mitnehmerelement zusammenwirkt. Dadurch können die Mitnehmerzapfen zur Verbindung der beiden Mitnehmerelemente ausgebildet werden, wodurch eine großflächige Verbindung ermöglicht wird, die die Biegebeanspruchung in den Mitnehmerzapfen reduziert.

Vorteilhafte Weiterbildungen der erfindungsgemäßen Lastdrehmomentsperre sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

In einer bevorzugten Ausführungsform der Erfindung wird vorgeschlagen, dass das zweite Mitnehmerelement in einem Gehäuseelement auf der dem ersten Mitnehmerelement abgewandten Seite des Antriebsrades bzw. am Antriebsrad radial gelagert ist. Dadurch wird mit relativ geringem Aufwand eine radiale Ausrichtung des zweiten Mitnehmerelements zum ersten Mitnehmerelement verwirklicht und die Funktion der radialen Führung des zweiten Mitnehmerelements von der Verbindung mit dem ersten Mitnehmerelement getrennt.

Um eine definierte Position der beiden Mitnehmerelemente zueinander zu realisieren, die darüber hinaus Fehlpositionierungen bei der Montage vermeidet, wird darüber hinaus vorgeschlagen, dass das zweite Mitnehmerelement wenigstens eine, insbesondere taschenförmige Ausnehmung zur formschlüssigen Aufnahme des wenigstens einen Mitnehmerzapfens aufweist.

Hierbei wird eine besonders sichere und feste Verbindung der beiden Mitnehmerelemente ermöglicht, wenn der mit der Ausnehmung zusammenwirkende Mitnehmerzapfen in axialer Richtung längsgeschlitzt ausgebildet ist und, wenn zwischen dem Mitnehmerzapfen und der Ausnehmung eine Presspassung ausgebildet ist. Insbesondere lassen sich dabei durch die längsgeschlitzte Ausbildung des Mitnehmerzapfens Bauteiletoleranzen zwischen der Ausnehmung und dem Mitnehmerzapfen auf einfache Weise ausgleichen.

Um den Kontaktbereich zum Bremselement optimal konstruktiv auslegen zu können und von der Lagerung des Mitnehmerzapfens zu trennen wird darüber hinaus vorgeschlagen, dass der Kontaktbereich zum Bremselement am zweiten Mitnehmerelement als wenigstens eine insbesondere rippenförmige Anformung ausgebildet ist und, dass die Anformung radial versetzt zu dem wenigstens einen Mitnehmerzapfen angeordnet ist.

Besonders bevorzugt hierbei ist, dass die Anformung mit einem Schutzelement verbunden ist, das mit dem Bremselement unmittelbar zusammenwirkt. Durch ein derartiges Schutzelement wird insbesondere der Verschleiß an der Kontaktfläche des zweiten Mitnehmerelements herabgesetzt bzw. lässt sich das zweite Mitnehmerelement optimal an die Übertragung eines Drehmoments an das Bremselement anpassen.

Daher wird in einer besonders bevorzugten Variante dieser Ausführungsform vorgeschlagen, dass zumindest das zweite Mitnehmerelement aus Kunststoff ausgebildet ist und, dass das Schutzelement aus gegenüber dem zweiten Mitnehmerelement härterem Material, insbesondere aus Metall, besteht.

Eine besonders hohe Betriebssicherheit der Lastdrehmomentsperre durch eine Führung des insbesondere als Schlingfeder ausgebildeten Bremselements wird bewirkt, wenn das zweite Mitnehmerelement wenigstens einen am zweiten Mitnehmerelement insbesondere einstückig angeformten Niederhalter aufweist, der das Bremselement auf der dem Antriebsrad zugewandten Seite überdeckt. Damit werden insbesondere Berührungen zwischen der Schlingfeder und dem Antriebsrad vermieden, die ansonsten zu einem Blockieren des Antriebsrades führen könnten.

Um unkontrollierte Bewegungen des Mitnehmers bzw. des Bremselements zu vermeiden, die mit Geräuschen verbunden sind, wird es darüber hinaus in einer weiteren Ausgestaltung der Erfindung vorgeschlagen, dass das Antriebsrad auf der dem zweiten Mitnehmerelement zugewandten Seite wenigstens eine Reibfläche aufweist, die die Reibung zwischen Antriebsrad und dem Bremselement bzw. zwischen dem Antriebsrad und dem unteren Mitnehmerelement erhöht.

Die Erfindung umfasst auch ein Aggregat, insbesondere für Kraftfahrzeuganwendungen mit einer erfindungsgemäßen Lastdrehmomentsperre. Ein derartiges Aggregat ermöglicht bei relativ kompakter Bauweise die Übertragung relativ hoher Drehmomente insbesondere in Sperrrichtung.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine perspektivische Ansicht auf ein teilweise geöffnetes Aggregat mit einer erfindungsgemäßen Lastdrehmomentsperre,
- Fig. 2: eine Explosionsdarstellung der wesentlichen Bestandteile einer erfindungsgemäßen Lastdrehmomentsperre,
- Fig. 3: eine perspektivische Ansicht einer teilweise montierten Lastdrehmomentsperre ohne Antriebsrad und oberem Mitnehmerelement,
- Fig. 4: die Anordnung gemäß Fig. 3 mit montiertem Antriebsrad, ebenfalls in perspektivischer Darstellung,
- Fig. 5: die Anordnung gemäß Fig. 3 mit montiertem oberem Mitnehmerelement, jedoch ohne Antriebsrad, ebenfalls in perspektivischer Ansicht und
- Fig. 6: eine Unteransicht auf das Antriebsrad.

Gleiche Bauteile bzw. Bauteile mit gleicher Funktion sind in den Figuren mit identischen Bezugsziffern versehen.

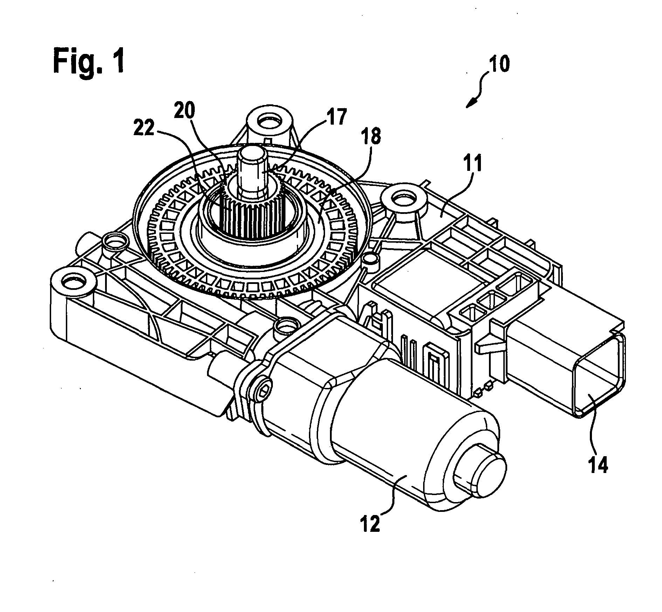

In der Fig. 1 ist ein Aggregat 10 für Kraftfahrzeuganwendungen in Form eines Fensterheberantriebs dargestellt. Anstelle eines Fensterheberantriebs liegt es auch im Rahmen der Erfindung, dass das Aggregat 10 als Motor, Maschine, Feststellantrieb, Schiebedachantrieb, elektrische Kraftfahrzeuglenkung oder ähnliches ausgebildet ist. Das Aggregat 10 weist im Ausführungsbeispiel ein aus mehreren Teilen im Kunststoffspritzverfahren oder im Metalldruckgussverfahren hergestelltes Gehäuse 11 auf. An das Gehäuse 11 ist ein Antriebsmotor 12 seitlich angeflanscht, der als Elektromotor ausgebildet ist. Seitlich neben dem Antriebsmotor 12 ist in dem Gehäuse 11 eine nicht dargestellte Steuerelektronik integriert, die über einen Steckeranschluss 14 z.B. mit dem Kabelbaum des Kraftfahrzeugs verbindbar ist. Über den Steckeranschluss 14 wird auch die benötigte Energie für den Antriebsmotor 12 in das Aggregat 10 eingeleitet.

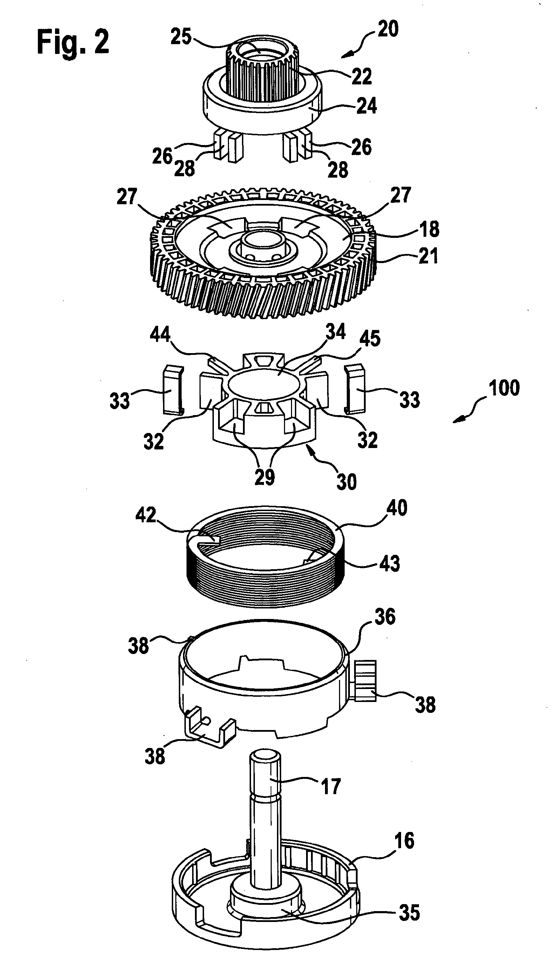

In dem Gehäuse 11 ist eine in der Fig. 2 erkennbare, topfförmige Gehäuseschale 16 angeordnet. In die insbesondere aus Kunststoff bestehende Gehäuseschale 16 ist in einer Bohrung ein Achsstummel 17 eingepresst, der der Lagerung eines Antriebsrades 18 und eines Mitnehmers 20 dient. Hierbei weist das Antriebsrad 18 eine insbesondere als Schrägverzahnung 21 ausgebildete Antriebsverzahnung auf, die mit einer in den Figuren nicht erkennbaren Verzahnung kämmt, welche auf einer ebenfalls nicht erkennbaren Antriebswelle des Antriebsmotors 12 angeordnet ist. Ein über den Antriebsmotor 12 in das Antriebsrad 18 eingeleitetes Antriebsdrehmoment wird über den Mitnehmer 20 übertragen, der hierzu eine Verzahnung 22 aufweist, die insbesondere mit einer Gegenverzahnung eines nicht dargestellten Elementes einer Fensterhebermechanik formschlüssig zusammenwirkt. Hierzu wird das Element mit seiner Gegenverzahnung axial auf die Verzahnung 22 aufgeschoben. Über die Verzahnung 22 lässt sich somit das von dem Antriebsmotor 12 eingeleitete Drehmoment an die mit dem Aggregat 10 in Wirkverbindung angeordnete Fensterhebermechanik übertragen, die zum Anheben bzw. Absenken einer Fensterscheibe dient.

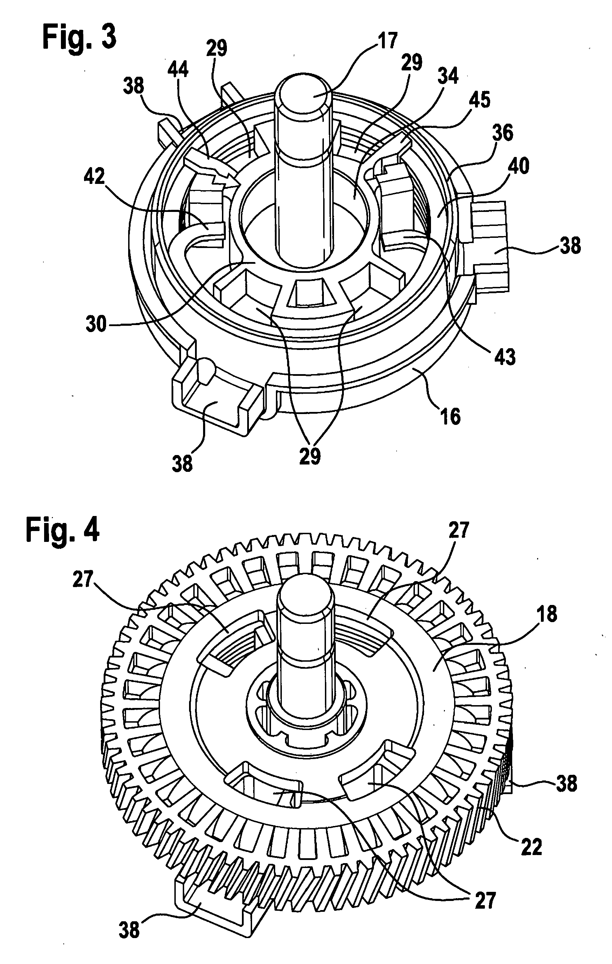

Wie insbesondere aus einer Zusammenschau der Fig. 2 bis 5 erkennbar ist, ist der Mitnehmer 20 zweiteilig ausgeführt. Hierbei weist der Mitnehmer 20 ein oberes bzw. erstes Mitnehmerelement 24 auf, das auch die Außenverzahnung 22 trägt. Das erste Mitnehmerelement 24 ist über eine Durchgangsbohrung 25 (ggf. mit einem darin angeordneten Lager) auf dem Achsstummel 17 drehbar gelagert. An der Unterseite des ersten Mitnehmerelements 24 sind vier Mitnehmerzapfen 26 angeordnet, die vorzugsweise einstückig an dem aus Kunststoff bestehenden ersten Mitnehmerelement 24 angeformt sind. Die Mitnehmerzapfen 26 durchgreifen das Antriebsrad 18, welches hierzu im Ausführungsbeispiel vier Durchbrüche 27 aufweist. Wesentlich ist noch, dass die Dimensionierung der Durchbrüche 27 im Verhältnis zu den Mitnehmerzapfen 26 derart ist, dass die Mitnehmerzapfen 26 des ersten Mitnehmerelements 24 im Antriebsrad 18 bzw. den Durchbrüchen 27 mit Drehwinkelspiel angeordnet sind.

Die vier Mitnehmerzapfen 26 weisen jeweils einen durchgehenden, in radialer Richtung verlaufenden Längsschlitz 28 auf. Die Mitnehmerzapfen 26 greifen unterhalb des Antriebsrads 18 in taschenförmige Ausnehmungen 29 eines unteren, zweiten Mitnehmerelements 30 formschlüssig ein. Das untere (zweite) Mitnehmerelement 30 ist bevorzugt ebenfalls aus Kunststoff im Spritzgussverfahren hergestellt. Die Dimensionierung der Mitnehmerzapfen 26 ist im Verhältnis zu den taschenförmigen Ausnehmungen 29 derart, dass die Mitnehmerzapfen 26 beim Einschieben in die Ausnehmungen 29 gegebenenfalls leicht deformiert werden, was durch die Längsschlitze 28 ermöglicht wird. Somit wird bei dem Verbinden der beiden Mitnehmerelemente 24, 30 zwischen dem oberen (ersten) Mitnehmerelement 24 und dem unteren Mitnehmerelement 30 eine Pressverbindung ausgebildet.

Das untere Mitnehmerelement 30 weist ferner zwei, in Längsrichtung über die gesamte Höhe des unteren Mitnehmerelements 30 verlaufende Übertragungsrippen 32 auf, die im Ausführungsbeispiel in etwa gegenüberliegend angeordnet sind. Die beiden Übertragungsrippen 32 sind jeweils von einem, insbesondere aus Metall bestehenden Schutzelement in Form einer Schutzkappe 33 abgedeckt. Die Schutzkappe 33 kann dabei auf die Übertragungsrippe 32 aufgeklipst sein oder in sonstiger Weise mit der Übertragungsrippe 32 verbunden werden.

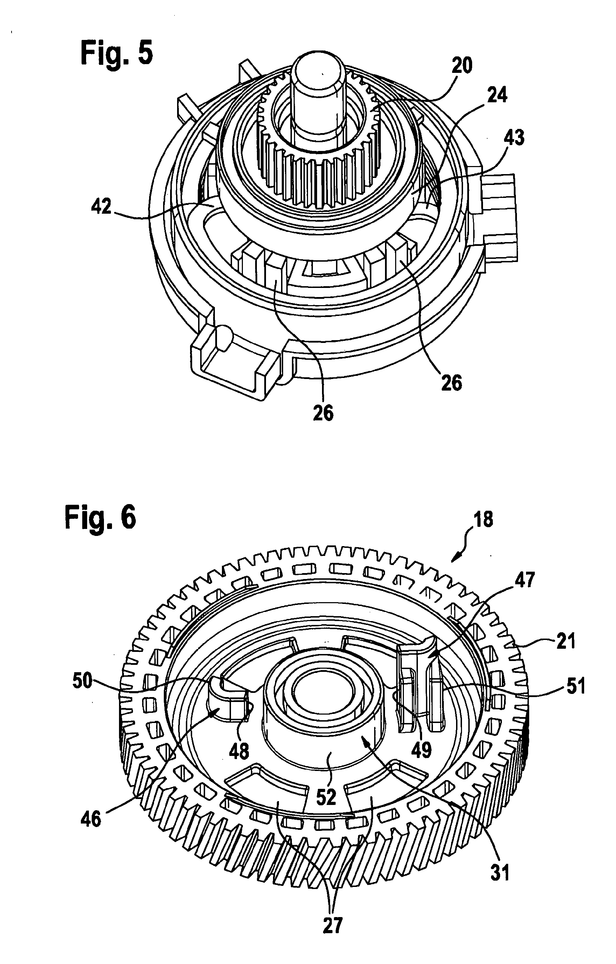

Die radiale Lagerung des unteren Mitnehmerelements 30 erfolgt über einen an der Unterseite des Antriebsrades 18 einstückig angeformten, lediglich in der Fig. 6 erkennbaren, radial umlaufenden stegförmigen Bund 31, der in eine Bohrung 34 des unteren Mitnehmerelements 30 eingreift. Alternativ oder zusätzlich erfolgt die radiale Lagerung des zweiten Mitnehmerelements 30 über einen in der Gehäuseschale 16 angeformten Lagerbund 35, der ebenfalls in die Bohrung 34 eingreift.

Innerhalb der Gehäuseschale 16 ist noch eine ortsfeste, insbesondere aus Blech bestehende Bremstrommel 36 angeordnet. Zur drehmomentfesten Anordnung der Bremstrommel 36 in der Gehäuseschale 16 bzw. dem Gehäuse 11 weist die Bremstrommel 36 im Ausführungsbeispiel drei, in gleichmäßigen Winkelabständen zueinander angeordnet, radial nach außen stehende Haltelaschen 38 auf. Die Bremstrommel 36 ist Bestandteil einer erfindungsgemäßen Lastdrehmomentsperre 100. Die Lastdrehmomentsperre 100 umfasst weiterhin ein als Schlingfeder 40 ausgebildetes Bremselement, die radial innerhalb der Bremstrommel 36 mit geringem radialem Abstand zu dieser angeordnet ist. Von den beiden Enden der Schlingfeder 40 ragt jeweils ein Federende 42, 43 radial nach innen ab. Die beiden Federenden 42, 43 sind jeweils in unmittelbarer Nähe zu den Übertragungsrippen 32 bzw. den Schutzkappen 33 angeordnet, und wirken beim Einleiten eines zu sperrenden Drehmoments mit den Übertragungsrippen 32 zusammen. Das untere Mitnehmerelement 30 weist ferner zwei, als Niederhalter für die Schlingfeder 40 wirkende, radial nach außen ragende und einstückig am unteren Mitnehmerelement 30 angeformte Stege 44, 45 auf, die nahe den beiden Übertragungsrippen 32 angeordnet sind. Durch die Stege 44, 45 lässt sich insbesondere ein Kontakt der Schlingfeder 40 mit dem Antriebsrad 18 vermeiden.

Aus der in der Fig. 6 dargestellten Unteransicht des Antriebsrades 18 ist erkennbar, dass dieses an seiner Unterseite zwei einstückig am Antriebsrad 18 angeformte, eine unterschiedliche Höhe aufweisende Reibungsstege 46, 47 aufweist. Die Reibungsstege 46, 47, die jeweils einem der Federenden 42, 43 der Schlingfeder 40 zugeordnet sind, weisen radiale innere erste Reibflächen 48, 49, sowie radial äußere zweite Reibflächen 50, 51 auf. Die ersten Reibflächen 48, 49 sind in Wirkverbindung mit dem unteren Mitnehmerelement 30 angeordnet, um dessen Drehung durch Reibung zu erschweren. Hierzu kann auch die Außenfläche 52 des Bundes 31 dienen, der ebenfalls in die Reibung erhöhender Wirkverbindung mit der Bohrung 34 des unteren Mitnehmerelements 30 angeordnet ist. Weiterhin sind die zweiten Reibflächen 50, 51 in Wirkverbindung mit dem Innenumfang der Schlingfeder 40 angeordnet, um ebenfalls deren Drehbewegung zu hemmen. Somit dienen die ersten und zweiten Reibflächen 48 bis 51 sowie die Außenfläche 52 dazu, unkontrollierte, mit Geräuschen verbundene Bewegungen der Schlingfeder 40 bzw. der Mitnehmerzapfen 26 zu verhindern.

Die Arbeitsweise der Lastdrehmomentsperre 100 ist wie folgt: Beim Übertragen eines Antriebsdrehmoments von dem Antriebsrad 18 über die Mitnehmerzapfen 26 auf das obere Mitnehmerelement 24 des Mitnehmers 20 ist die Schlingfeder 40 innerhalb der Bremstrommel 36 mit geringem radialen Spiel zu dieser entspannt angeordnet, so dass ein Antriebsmoment übertragen werden kann. Dabei dreht sich die Schlingfeder 40 synchron mit dem Mitnehmer 20, wobei die Übertragungsrippen 32 derart mit den Federenden 42, 43 in Wirkverbindung angeordnet sind, dass diese derart zueinander verdreht werden, dass ein radiales Aufweiten der Schlingfeder 40 nicht sattfindet. Wird hingegen insbesondere von dem zu verstellenden Element (zum Beispiel der Fensterscheibe) über das obere Mitnehmerelement 24 des Mitnehmers 20 ein zu sperrendes bzw. zu blockierendes Drehmoment auf die Lastdrehmomentsperre 100 übertragen, so wird diese zunächst über die Mitnehmerzapfen 26 an das untere Mitnehmerelement 30 weitergeleitet. Das untere Mitnehmerelement 30 wird dann aufgrund des Drehmoments gedreht, wobei die die Übertragungsrippen 32 bzw. die Schutzkappen 33 derart in Wirkverbindung mit den Federenden 42, 43 der Schlingfeder 40 geraten, dass die Übertragungsrippen 32 die beiden Federenden 42, 43 gegeneinander verdrehen, wobei sich der Außendurchmesser der Schlingfeder 40 vergrößert, so dass die einzelnen Windungen der Schlingfeder 40 mit ihrem Außenumfang an der Bremstrommel 36 anliegen und das über die Übertragungsrippen 32 eingeleitete Drehmoment sperren. Dadurch wird eine Drehung des Antriebsrads 18 verhindert.

Die soweit beschriebene Lastdrehmomentsperre 100 kann in vielfältiger Art und Weise abgewandelt bzw. modifiziert werden, ohne vom Erfindungsgedanken abzuweichen. Dieser besteht insbesondere in der Verwendung eines zweiteiligen, aus einem oberen Mitnehmerelement 24 und einem unteren Mitnehmerelement 30 bestehenden Mitnehmer 20, wobei das untere Mitnehmerelement 30 Übertragungsrippen 32 zum Übertragen eines zu sperrenden Drehmoments aufweist, welche örtlich getrennt vom Mitnehmerzapfen 26 angeordnet sind.

## Patentansprüche

1. Lastdrehmomentsperre (100), mit einem zum Sperren eines Drehmomentes mit einem Bremskörper (36) reibschlüssig zusammenwirkenden, insbesondere als Schlingfeder ausgebildeten Bremselement (40) sowie mit einem auf einer Achse (17) drehbar gelagerten Antriebsrad (18), das zum Übertragen eines Drehmoments von einem Antriebsmotor (12) mit mindestens einem mit dem Antriebsrad (18) zusammenwirkenden Mitnehmer (20) gekoppelt ist, wobei der Mitnehmer (20) mindestens einen Kontaktbereich (32) zum Bremselement (40) aufweist, mit dem ein zu blockierendes Drehmoment über das Bremselement (40) in den Bremskörper (36) einleitbar ist,
**dadurch gekennzeichnet,**
**dass** der Mitnehmer (20) aus einem ersten Mitnehmerelement (24) und einem als separatem Bauteil ausgebildeten - insbesondere scheibenförmigen - zweiten Mitnehmerelement (30) besteht, dass das erste oder zweite Mitnehmerelement (24, 30) wenigstens einen Mitnehmerzapfen (26) aufweist, der einen Durchbruch (27) im Antriebsrad (18) durchgreift, dass die beiden Mitnehmerelemente (24, 30) mit Ausnahme des wenigstens einen Mitnehmerzapfens (26) auf unterschiedlichen Seiten des Antriebsrades (18) angeordnet sind.

2. Lastdrehmomentsperre nach Anspruch 1,
**dadurch gekennzeichnet,**
**dass** das zweite Mitnehmerelement (30) innerhalb des Bremselements (40) angeordnet ist, und dass der Kontaktbereich (32) zum Bremselement (40) dem zweiten Mitnehmerelement (30) zugeordnet ist, und dass die beiden Mitnehmerelemente (24, 30) miteinander verbunden sind.

3. Lastdrehmomentsperre nach Anspruch 1 oder 2,
**dadurch gekennzeichnet,**
**dass** das zweite Mitnehmerelement (30) in einem Gehäuseelement (16) auf der dem ersten Mitnehmerelement (24) abgewandten Seite des Antiebsrades (18) und/oder am Antriebsrad (18) radial gelagert ist.

4. Lastdrehmomentsperre nach einem der vorhergehenden Ansprüche,
**dadurch gekennzeichnet,**
**dass der Mitnehmerzapfen (26) am ersten Mitnehmerelement (24) angeordnet ist, und** das zweite Mitnehmerelement (30) wenigstens eine - insbesondere taschenförmige - Ausnehmung (29) zur formschlüssigen Aufnahme des wenigstens einen Mitnehmerzapfens (26) aufweist.

5. Lastdrehmomentsperre nach **Anspruch 4,**
**dadurch gekennzeichnet,**
**dass** der mit der Ausnehmung (29) zusammenwirkende Mitnehmerzapfen (26) in axialer Richtung längsgeschlitzt ausgebildet ist und, dass zwischen dem Mitnehmerzapfen (26) und der Ausnehmung (29) eine Presspassung ausgebildet ist.

6. Lastdrehmomentsperre nach einem der vorhergehenden Ansprüche,
**dadurch gekennzeichnet,**
**dass** der Kontaktbereich zum Bremselement (40) am zweiten Mitnehmerelement (30) als wenigstens eine - insbesondere rippenförmige - Anformung (32) ausgebildet ist und, dass die Anformung (32) - insbesondere tangential - versetzt zu dem wenigstens einen Mitnehmerzapfen (26) angeordnet ist.

7. Lastdrehmomentsperre nach Anspruch 6,
**dadurch gekennzeichnet,**
**dass** die Anformung (32) mit einem Schutzelement (33) verbunden ist, das mit dem Bremselement (40) unmittelbar zusammenwirkt.

8. Lastdrehmomentsperre nach Anspruch 7,
**dadurch gekennzeichnet,**
**dass** zumindest das zweite Mitnehmerelement (30) aus Kunststoff ausgebildet ist und, dass das Schutzelement (33) aus gegenüber dem zweiten Mitnehmerelement (30) härterem Material - insbesondere aus Metall - besteht.

9. Lastdrehmomentsperre nach einem der vorhergehenden Ansprüche,
**dadurch gekennzeichnet,**
**dass** das zweite Mitnehmerelement (30) wenigstens einen am zweiten Mitnehmerelement (30) - insbesondere einstückig - angeformten Niederhalter (44, 45) aufweist, der das Bremselement (40) auf der dem Antriebsrad (18) zugewandten Seite überdeckt.

10. Lastdrehmomentsperre nach einem der vorhergehenden Ansprüche,
**dadurch gekennzeichnet,**
**dass** das Antriebsrad (18) auf der dem zweiten Mitnehmerelement (30) zugewandten Seite wenigstens eine Reibfläche (48 bis 52) aufweist, die die Reibung zwischen Antriebsrad (18) und dem Bremselement (40) bzw. zwischen dem Antriebsrad (18) und dem unteren Mitnehmerelement (30) erhöht.

11. Aggregat (10), insbesondere für Kraftfahrzeuganwendungen, insbesondere Motor, Maschine, Verstellantrieb, Schiebedachantrieb, Fensterheberantrieb, elektrische Servolenkung, mit einer Lastdrehmomentsperre (100) nach einem der Ansprüche 1 bis 10.

## Claims

1. Load torque lock (100) having a braking element (40) that interacts frictionally with a braking body (36) in order to lock a torque and is formed in particular as a wrap spring, and also having a drive wheel (18) mounted rotatably on an axle (17), said drive wheel (18), in order to transmit a torque from a drive motor (12), being coupled to at least one driver (20) that interacts with the drive wheel (18), wherein the driver (20) has at least one contact region (32) with the braking element (40), by way of which a torque to be blocked is introducible into the braking body (36) via the braking element (40),
**characterized**
**in that** the driver (20) consists of a first driver element (24) and an - in particular disk-shaped - second driver element (30) formed as a separate component, in that the first or second driver element (24, 30) has at least one driver pin (26) which engages through an aperture (27) in the drive wheel (18), in that the two driver elements (24, 30) are arranged on different sides of the drive wheel (18), with the exception of the at least one driver pin (26).

2. Load torque lock according to Claim 1,
**characterized**
**in that** the second driver element (30) is arranged within the braking element (40), and in that the contact region (32) with the braking element (40) is assigned to the second driver element (30), and in that the two driver elements (24, 30) are connected together.

3. Load torque lock according to Claim 1 or 2,
**characterized**
**in that** the second driver element (30) is radially mounted in a housing element (16) on that side of the drive wheel (18) that is remote from the first driver element (24) and/or on the drive wheel (18).

4. Load torque lock according to one of the preceding claims,
**characterized**
**in that** the driver pin (26) is arranged on the first driver element (24), and the second driver element (30) has at least one - in particular pocket-shaped - recess (29) for receiving the at least one driver pin (26) in a form-fitting manner.

5. Load torque lock according to Claim 4,
**characterized**
**in that** the driver pin (26) that interacts with the recess (29) is formed in a longitudinally slotted manner in the axial direction, and in that a press fit is formed between the driver pin (26) and the recess (29).

6. Load torque lock according to one of the preceding claims,
**characterized**
**in that** the contact region with the braking element (40) is formed on the second driver element (30) as at least one - in particular rib-shaped - integral formation (32), and in that the integral formation (32) is arranged in an - in particular tangentially - offset manner with respect to the at least one driver pin (26).

7. Load torque lock according to Claim 6,
**characterized**
**in that** the integral formation (32) is connected to a protective element (33) which interacts directly with the braking element (40).

8. Load torque lock according to Claim 7,
**characterized**
**in that** at least the second driver element (30) is formed from plastics material, and in that the protective element (33) consists of harder material than the second driver element (30) - in particular of metal.

9. Load torque lock according to one of the preceding claims,
**characterized**
**in that** the second driver element (30) has at least one holding-down means (44, 45) integrally formed - in particular in one piece - on the second driver element (30), said holding-down means (44, 45) covering the braking element (40) on the side facing the drive wheel (18).

10. Load torque lock according to one of the preceding claims,
**characterized**
**in that** the drive wheel (18) has at least one friction surface (48 to 52) on the side facing the second driver element (30), said at least one friction surface (48 to 52) increasing the friction between the drive wheel (18) and the braking element (40) and between the drive wheel (18) and the lower driver element (30).

11. Unit (10), in particular for motor vehicle applications, in particular a motor, machine, adjustment drive, sliding-roof drive, window opener drive, electric power steering system, having a load torque lock (100) according to one of Claims 1 to 10.

## Revendications

1. Dispositif de blocage de couple de charge (100) comprenant un élément de freinage (40) coopérant par engagement par friction avec un corps de freinage (36) pour le blocage d'un couple, réalisé notamment sous forme de ressort hélicoïdal, ainsi qu'une roue d'entraînement (18) montée à rotation sur un axe (17), laquelle est accouplée pour le transfert d'un couple depuis un moteur d'entraînement (12) à au moins un dispositif d'entraînement (20) coopérant avec la roue d'entraînement (18), le dispositif d'entraînement (20) présentant au moins une zone de contact (32) avec l'élément de freinage (40), avec laquelle un couple devant être bloqué peut être introduit par le biais de l'élément de freinage (40) dans le corps de freinage (36),
**caractérisé en ce que**
le dispositif d'entraînement (20) se compose d'un premier élément d'entraînement (24) et d'un deuxième élément d'entraînement (30) réalisé sous forme de composant séparé - en particulier en forme de disque, **en ce que** le premier ou le deuxième élément d'entraînement (24, 30) présente au moins un tourillon d'entraînement (26), lequel vient en prise à travers un orifice (27) dans la roue d'entraînement (18), **en ce que** les deux éléments d'entraînement (24, 30), à l'exception de l'au moins un tourillon d'entraînement (26), sont disposés sur des côtés différents de la roue d'entraînement (18).

2. Dispositif de blocage de couple de charge selon la revendication 1,
**caractérisé en ce que**
le deuxième élément d'entraînement (30) est disposé à l'intérieur de l'élément de freinage (40), et **en ce que** la zone de contact (32) avec l'élément de freinage (40) est associée au deuxième élément d'entraînement (30), et **en ce que** les deux éléments d'entraînement (24, 30) sont connectés l'un à l'autre.

3. Dispositif de blocage de couple de charge selon la revendication 1 ou 2,
**caractérisé en ce que**
le deuxième élément d'entraînement (30) est monté radialement dans un élément de boîtier (16) sur le côté de la roue d'entraînement (18) opposé au premier élément d'entraînement (24) et/ou sur la roue d'entraînement (18).

4. Dispositif de blocage de couple de charge selon l'une quelconque des revendications précédentes,
**caractérisé en ce que**
le tourillon d'entraînement (26) est disposé sur le premier élément d'entraînement (24) et le deuxième élément d'entraînement (30) présente au moins un évidement (29) - notamment en forme de poche - pour recevoir par engagement par correspondance de forme l'au moins un tourillon d'entraînement (26).

5. Dispositif de blocage de couple de charge selon la revendication 4,
**caractérisé en ce que**
le tourillon d'entraînement (26) coopérant avec l'évidement (29) est réalisé de manière fendue longitudinalement dans la direction axiale et **en ce qu'**entre le tourillon d'entraînement (26) et l'évidement (29) est réalisé un ajustement serré.

6. Dispositif de blocage de couple de charge selon l'une quelconque des revendications précédentes,
**caractérisé en ce que**
la zone de contact avec l'élément de freinage (40) est réalisée au niveau du deuxième élément d'entraînement (30) sous forme d'au moins une partie façonnée (32) - en particulier en forme de nervure - et **en ce que** la partie façonnée (32) est disposée de manière décalée - notamment tangentiellement - par rapport à l'au moins un tourillon d'entraînement (26).

7. Dispositif de blocage de couple de charge selon la revendication 6,
**caractérisé en ce que**
la partie façonnée (32) est connectée à un élément de protection (33) qui coopère directement avec l'élément de freinage (40).

8. Dispositif de blocage de couple de charge selon la revendication 7,
**caractérisé en ce**
**qu'**au moins le deuxième élément d'entraînement (30) est réalisé en plastique et en ce que l'élément de protection (33) se compose d'un matériau plus dur que celui du deuxième élément d'entraînement (30) - en particulier de métal.

9. Dispositif de blocage de couple de charge selon l'une quelconque des revendications précédentes,
**caractérisé en ce que**
le deuxième élément d'entraînement (30) présente au moins un élément de maintien (44, 45) façonné sur le deuxième élément d'entraînement (30) - en particulier d'une seule pièce, lequel recouvre l'élément de freinage (40) du côté tourné vers la roue d'entraînement (18).

10. Dispositif de blocage de couple de charge selon l'une quelconque des revendications précédentes,
**caractérisé en ce que**
la roue d'entraînement (18) présente, du côté tourné vers le deuxième élément d'entraînement (30), au moins une surface de friction (48 à 52), laquelle augmente le frottement entre la roue d'entraînement (18) et l'élément de freinage (40) ou entre la roue d'entraînement (18) et l'élément d'entraînement inférieur (30).

11. Groupe (10), en particulier pour des applications automobiles, en particulier moteur, machine, entraînement de réglage, entraînement de toit coulissant, entraînement de lève-glace, direction assistée électrique, comprenant un dispositif de blocage de couple de charge (100) selon l'une quelconque des revendications 1 à 10.
